# FASCICULE DE BREVET EUROPEEN

(11) **EP 2 271 236 B1**
(45) Date de publication et mention de la délivrance du brevet: **07.06.2017**
(21) Numéro de dépôt: 09742325.5
(22) Date de dépôt: 10.04.2009
(51) Int. Cl.: A45D 34/00, B44C 1/00, B23K 26/00, A45D 34/02

(54) **FLACON DE PARFUM**
PARFUMFLASCHE
PERFUME BOTTLE

(30) Priorité: 18.04.2008 FR 0852643
(43) Date de publication de la demande: 12.01.2011
(73) Titulaire: Shiseido International France, 75008 Paris (FR)
(72) Inventeur: RONSIN, Hervé, F-56140 Malestroit (FR); SOULARD, Fabrice, F-45450 Fay Aux Loges (FR)
(74) Mandataire: CAPRI
(86) Numéro de dépôt international: PCT/FR2009/050677
(87) Numéro de publication internationale: WO 2009/136127

(56) Documents cités:
- EP-A- 1 599 295
- FR-A- 2 690 862
- FR-A- 2 889 485
- ANONIMOUS: "L'argenture sur verre" VERRE ONLINE, [Online] 19 décembre 2004 (2004-12-19), XP002507974 INTERNET Extrait de l'Internet: URL:http://www.verreonline.fr/v_plat/tran_ miroi1.php> [extrait le 2008-12-12]

## Description

La présente invention concerne un flacon de parfum comme on en utilise dans le domaine de la parfumerie, ou encore celui de la cosmétique. Le terme parfum doit être entendu dans son sens le plus large, englobant bien évidemment les parfums au sens strict, c'est-à-dire un liquide odorant de faible viscosité, mais également d'autre types de liquides odorants de faible ou moyenne viscosité, tels que les eaux de toilettes, les lotions, par exemple après rasage, des gels, etc. La présente invention concerne également un procédé de décoration d'un tel flacon de parfum.

Les flacons de parfum sont en général réalisés en verre, mais ils peuvent également être réalisés dans d'autres matériaux, comme par exemple des matières plastiques (voir EP1599295) ou du métal. Dans le cadre de la présente invention, on s'intéresse plus particulièrement aux flacons de parfum sensiblement ou parfaitement transparents, c'est-à-dire réalisés à partir d'un ou de plusieurs matériau(x) laissant passer la lumière. Le matériau privilégié est bien entendu le verre, sans coloration ou très légèrement coloré.

La présente invention s'intéresse également au flacon de parfum dans lequel le corps du flacon qui forme le réservoir du parfum comprend une surface interne qui est en contact direct avec le parfum. En d'autres termes, le parfum n'est pas contenu dans une enveloppe barrière, telle qu'une poche ou un réservoir interne qui est séparé(e) de la surface interne, de sorte qu'il n'y a pas de contact entre le parfum et la surface interne. Dans la présente invention, le parfum, du fait qu'il est en contact avec la surface interne, ne doit pas réagir avec cette surface, par exemple par extraction ou largage de composants.

Dans l'art antérieur, on connaît déjà des flacons de parfum dont la surface interne a été revêtue avec une laque ou un vernis. Toutefois, le parfum est contenu dans une poche souple qui est introduis dans le réservoir. De cette façon, le parfum ne vient pas en contact avec la couche de laque ou de vernis, afin d'éviter toute interaction entre le parfum et les composants de la couche de laque ou vernis. De toute façon, dans ce type de flacon intérieurement laqué ou verni, il n'est pas possible de voir le parfum à l'intérieur du réservoir, d'une part parce que la laque ou le vernis recouvre l'intégralité de la surface interne du réservoir, et d'autre part parce que la poche souple contenant le parfum est opaque et inesthétique.

La présente invention a pour but de réaliser un autre type de décoration de flacon de parfum qui ne nécessite pas l'usage d'une poche souple ou d'une enveloppe barrière séparant le parfum de la surface interne du flacon. Un autre but de la présente invention est de réaliser un décor qui ne réagit pas avec le parfum. Encore un autre but de la présente invention est de réaliser un flacon de parfum transparent décoré à travers lequel on peut voir le parfum à l'intérieur du réservoir.

Pour atteindre ces différents buts, la présente invention propose un flacon de parfum selon la revendication 1, comprenant un corps et un col, le corps définissant un réservoir de parfum délimité par une surface interne, le corps étant réalisé en matériau sensiblement transparent, tel que du verre, la surface interne étant au moins partiellement revêtue avec une couche réfléchissante conférant un effet miroir, la couche étant visible et réfléchissante à travers le matériau transparent constitutif du corps, le parfum contenu dans le flacon venant avantageusement en contact direct de la couche réfléchissante.

Avantageusement, la couche est une couche d'argenture, essentiellement constituée d'ions d'argent. En variante, la couche réfléchissante peut être composée d'une couche d'or, de cuivre, de zinc, d'argent oxydé, etc., ou plus généralement d'un métal ayant des propriétés d'oxydoréduction.

Avantageusement, la surface interne est pourvue de plusieurs zones de couche qui sont séparées par des zones nues non revêtues au niveau desquelles le parfum est visible dans le réservoir. Ainsi, la surface interne du réservoir est au moins partiellement revêtue avec une couche d'argenture qui confère un effet miroir classique dénué de couleur. Là où la surface interne n'est pas revêtue avec la couche miroir, il est possible de voir le parfum à l'intérieur du réservoir. Il faut bien garder à l'esprit que le parfum vient au contact direct avec la couche miroir. C'est pourquoi il est particulièrement intéressant d'utiliser de l'argenture qui est essentiellement constituée d'ions d'argent, dont les qualités de neutralité, anti-bactérienne et anti-allergénique sont bien connues depuis longtemps. En effet, il a été constaté de manière empirique que le parfum, quelles que soient sa nature et sa composition, n'interagit pas de manière néfaste avec l'argent. D'autre part, il est également connu que l'argent est particulièrement bien accepté par la plupart des peaux. Par conséquent, même si le parfum contient quelques traces d'argent, il n'y a aucun danger à appliquer ce parfum sur la peau.

Selon un autre aspect de l'invention, le flacon comprend une surface externe qui peut être au moins partiellement revêtue avec un vernis chargé de fines particules colorantes pour modifier visuellement la teinte de la couche miroir interne.

Dans les cas où la couche réfléchissante n'est pas compatible avec le contact du parfum, il est envisagé de recouvrir la couche réfléchissante avec une couche de sol gel venant en contact direct avec le parfum.

La présente invention définit également un procédé de décoration d'un flacon de parfum selon la revendication 8. Avantageusement, la couche est une couche d'argenture, essentiellement constituée d'ions d'argent. En variante, la couche réfléchissante peut être une couche d'or, de cuivre, de zinc, d'argent oxydé, etc., ou plus généralement d'un métal ayant des propriétés d'oxydoréduction.

De préférence, une solution réductrice de AgN03 est appliquée sur la surface interne pour former la couche.

Selon une caractéristique intéressante de l'invention, un activateur, tel que du chlorure d'étain, et/ou un promoteur d'adhérence, tel que du chlorure de palladium est appliqué préalablement sur la surface interne avant application de la couche. Il a été constaté de manière empirique que ce traitement préalable d'activateur et/ou de promoteur d'adhérence permet d'assurer une parfaite adhérence ou fixation de la couche d'argenture sur la surface interne du réservoir. En l'absence de cette étape de traitement, la couche miroir se dégrade par décollement et/ou écaillage au contact du parfum.

Selon une autre caractéristique intéressante, on soumet le flacon, avec sa couche déjà appliquée, à une température d'environ 150°C à 190°C pendant une période d'environ 20 à 60 minutes. Cette cuisson permet d'éliminer toutes les traces d'eau et de sels réducteurs issus de la réaction chimique et obtenir ainsi une couche d'argent pure, stable sur le verre et possédant une résistance chimique suffisante au contact du parfum.

Selon un autre aspect avantageux de la présente invention, une partie de la couche est retirée de la surface interne pour former des zones nues non revêtues au niveau desquelles le parfum est visible dans le réservoir.

Avantageusement, on utilise un laser pour retirer la couche, le laser atteignant la couche de l'extérieur du flacon à travers le matériau constitutif du corps. De préférence, le laser est un laser fibré de type Yag. Le retrait partiel de la couche miroir permet de créer des décors intéressants ou des effets esthétiques attrayants. Le retrait partiel de la couche miroir peut être effectué par n'importe quelle technique, mais l'utilisation d'un laser, de préférence fibré de type Yag, s'est avéré particulièrement efficace et facile d'utilisation, étant donné qu'il est manipulé de l'extérieur du flacon en faisant passer le faisceau laser à travers le matériau constitutif du corps.

Selon un autre aspect, on recouvre au moins partiellement la surface externe du flacon avec un vernis chargé de fines particules colorantes.

Un principe de la présente invention est d'utiliser de l'argent, ou un autre métal, connu pour ces qualités de neutralité et d'inertie, pour constituer une couche sur la surface interne d'un flacon de parfum, de sorte que le contact direct du parfum avec la couche miroir est possible. Un autre principe de la présente invention est de traiter préalablement et/ou ultérieurement la surface interne du réservoir afin que la couche miroir d'argent ne se dégrade pas au contact du parfum. Enfin, encore un autre principe de la présente invention est d'utiliser un laser pour décaper de l'extérieur la couche miroir à travers l'épaisseur de matériau du flacon.

L'invention sera maintenant plus amplement décrite en référence aux dessins joints donnant à titre d'exemple non limitatif un mode de réalisation de l'invention.

Sur les figures :
La figure 1 est une vue de face schématique d'un flacon de parfum réalisé selon l'invention, et
La figure 2 est une vue de profil du flacon de la figure 1.

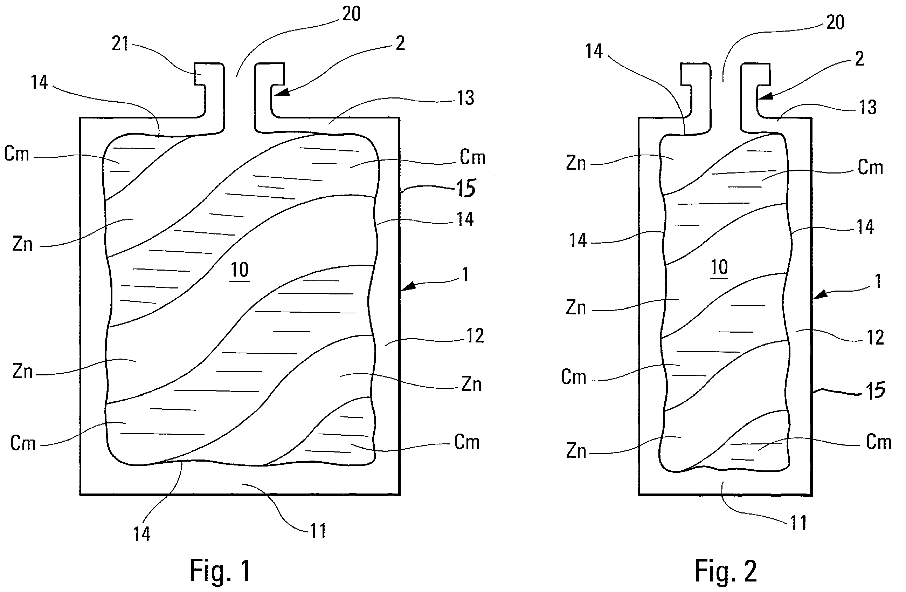

Le flacon de parfum des figures 1 et 2 comprend de manière classique un corps 1 et un col 2. Le corps 1 définit intérieurement un volume utile constant qui sert de réservoir de parfum 10. Ce réservoir 10 est délimité par une surface interne 14 qui est continue, excepté au niveau du col 2, qui définit une ouverture 20 faisant communiquer le réservoir de parfum 10 avec l'extérieur. Le corps 1 comprend un fond 11, quatre parois latérales 12 et un plateau supérieur ou épaulement 13 à partir duquel s'étend le col 2. La surface interne 14 est formée par les surfaces internes du fond 11, des parois latérales 12 et de l'épaulement 13. Dans l'exemple non limitatif utilisé pour illustrer la présente invention, le corps 1 du flacon présente une forme générale parallélépipédique. Il en est de même pour le réservoir 10. Cependant, sans sortir du cadre de l'invention, on peut envisager n'importe quelle forme géométrique ou complexe pour le corps 1 et son réservoir interne 10. Le corps 1 peut par exemple être de révolution autour d'un axe, parfaitement cylindrique, ou encore sous la forme d'objets les plus divers, comme par exemple une pomme, un bambou, etc. En d'autres termes, la forme du corps 1 et de son réservoir interne 10 n'est pas critique pour la présente invention.

Cependant, le corps 1 est au moins partiellement ou entièrement réalisé à partir d'un ou de plusieurs matériau(x) sensiblement ou parfaitement transparent(s) ou translucide(s), de sorte qu'il est possible de voir le parfum à l'intérieur du réservoir 10 à travers une paroi latérale 12, le fond 11 et/ou l'épaulement 13. Le corps 1 peut par exemple être entièrement transparent, avec ou sans coloration. Il est également possible de réaliser le col 2 avec un matériau sensiblement ou parfaitement transparent. Comme matériau constitutif pour réaliser le corps 1, et éventuellement le col 2, on peut utiliser du verre avec ou sans coloration, ou encore un matériau plastique transparent, comme par exemple un polycarbonate. Toutefois, dans le cadre de l'invention, le verre est préféré.

Le flacon visible sur les figures 1 et 2 est normalement associé avec un organe de distribution, tel qu'une pompe, pour constituer ensemble un distributeur de produit fluide. La pompe est montée dans l'ouverture 20 du col 2 et est fixée de manière étanche par une bague de fixation qui vient en prise avec le col 2, qui est à cet effet formée avec un renfort annulaire 21. La pompe comprend de préférence un tube plongeur qui s'étend à l'intérieur du réservoir jusqu'à proximité du fond 11. D'autre part, la pompe comprend un poussoir actionnable axialement à l'aide d'un ou de plusieurs doigt(s) pour émettre des doses de produit fluide. Le poussoir est avantageusement pourvu d'un gicleur permettant une distribution pulvérisée du parfum.

Selon l'invention, la surface interne 14 du réservoir 10 est au moins partiellement revêtue avec une couche réfléchissante Cm qui confère un effet miroir. Etant donné que le corps 1 est transparent, cette couche Cm est visible à travers l'épaisseur de paroi du corps 1. L'effet miroir est donc observable à travers les parois latérales 12, le fond 11 et/ou l'épaulement 13. La couche Cm peut également s'étendre à l'intérieur du col 2. La couche réfléchissante Cm est avantageusement une couche d'argenture, essentiellement constituée d'ions argent. On peut également former une couche Cm avec de l'or, du cuivre, du zinc, de l'argent oxydé, etc., ou plus généralement d'un métal ayant des propriétés d'oxydoréduction.

Les tentatives pour appliquer les couches de métallisation sur la surface interne 14 se sont soldées par des échecs : il est entre autre impossible d'utiliser une technique de vaporisation sous vide pour appliquer une couche de métal sur la surface interne 14, en raison de la dimension réduite de l'ouverture 20 formée par le col 2. En effet, le diamètre de l'ouverture 20 n'est que de l'ordre de 10 à 20 millimètre. L'avantage avec la couche d'argenture est qu'elle ne nécessite pas l'utilisation d'une telle technique de vaporisation sous vide. L'application de cette couche d'argenture peut être effectuée à la pression atmosphérique en enduisant tout simplement la surface interne 14 avec une solution réductrice d'AgNO3, par exemple par agitation du flacon. D'autre part, l'utilisation de la plupart des métaux vaporisables est incompatible avec le parfum, pour des questions de réactions d'interactivité. Le parfum chargé avec des traces de ces métaux peut même être nocif pour la santé de l'utilisateur. Ceci n'est pas le cas avec l'argent qui est connu pour ses qualités de neutralité, d'inertie, anti-bactérienne et anti-allergénique. Même si des traces d'argent sont présentes dans le parfum, il n'y a aucun danger pour l'utilisateur. C'est pourquoi l'argent présente un double avantage, à savoir celui d'être applicable facilement et d'être neutre.

Toutefois, pour garantir une parfaite adhérence de la couche d'argenture sur la surface interne 14, il est préférable de soumettre cette surface interne 14 à un traitement préalable. On peut par exemple appliquer un activateur, tel que du chlorure d'étain sur la surface interne 14 du réservoir. On peut également appliquer un promoteur d'adhérence tel que du chlorure de palladium sur la surface interne 14 du réservoir. Avant, entre et après chaque application, il est préférable de rincer soigneusement le réservoir 10. Ensuite, l'argenture liquide, qui est constituée d'une solution réductrice et d'une solution d'AgNO3, et versé dans le réservoir 10 à travers l'ouverture 20. Pour permettre une répartition uniforme de l'argenture, le flacon de parfum est agité ou secoué. L'excédent d'argenture est vidé par versement. L'argenture, qui est constituée d'un sel d'argent, se transforme sur la surface interne 14 en ions argent. Après séchage, on obtient une couche miroir réfléchissante essentiellement constituée d'ions argent. La couche réfléchissante miroir s'étend de préférence sur la totalité de la surface interne 14. Toutefois, il est possible de n'appliquer la couche que sur une partie de la surface interne.

Après l'opération d'argenture, il est nécessaire de vidanger le flacon, puis de le rincer à l'eau distillée et le passer en arche de cuisson entre 150 et 190°C pendant une période allant de 20 minutes à 60 minutes pour éliminer toutes les traces d'eau et de sels réducteurs issus de la réaction chimique et obtenir ainsi une couche d'argent pure, stable sur le verre et possédant une résistance chimique suffisante au contact du parfum.

Selon l'invention, il est possible de retirer une partie de la couche réfléchissante miroir de manière à former des zones nues non revêtues Zn au niveau desquelles le parfum est visible dans le réservoir 10. Sur les figures 1 et 2, la couche réfléchissante Cm s'étend sous la forme de bandes ondulées séparées par des bandes ondulées de zones nues non revêtues Zn. En d'autres termes, les zones de couche Cm sont séparées par des zones nues Zn. Bien entendu, il ne s'agit là que d'une configuration quelconque non limitative : il est possible de retirer la couche Cm selon des motifs très divers pour conférer des aspects esthétiques particuliers. Il est cependant nécessaire que le retrait partiel de la couche Cm n'engendre pas des bords fragiles ou écaillés qui seraient vite altérés par le parfum. De plus, des bords écaillés ne seraient pas vraiment esthétiques. On peut utiliser n'importe quelles techniques pour retirer partiellement la couche Cm, mais l'utilisation d'un laser, de préférence fibré de type Yag, s'est avérée particulièrement appropriée, notamment en raison de sa grande précision de l'ordre de 30 micromètres. Le laser fibré de type Yag laisse des bords de couches Cm parfaitement nets, et de ce fait très résistants au parfum. D'autres types de laser peuvent être utilisés, mais des essais ont prouvé que le laser fibré de type Yag offre les performances les plus élevées. Un autre avantage du laser est que le déplacement du faisceau peut facilement être commandé par un logiciel approprié, permettant ainsi de créer des motifs très complexes dans la couche Cm.

Il faut également noter que le laser est utilisé de l'extérieur, et non pas de l'intérieur du réservoir 10, en dirigeant le faisceau sur la couche réfléchissante Cm à travers l'épaisseur de paroi du corps 1. L'utilisation externe du laser offre une très grande facilité de manipulation, et la possibilité d'utiliser des lasers conventionnels, qui ne seraient utilisables si cette opération de décapage au laser devait s'effectuer de l'intérieur du réservoir 10, en raison de l'ouverture restreinte du col. Cette caractéristique peut être utilisée pour d'autres traitements au laser de revêtements internes divers appliqués sur la surface interne du flacon.

Le flacon comprend bien entendu une surface externe 15 qui peut être au moins partiellement revêtue avec un vernis chargé de fines particules colorantes, qui peuvent être métalliques ou sous forme de pigment. On peut ainsi modifier visuellement la teinte de la couche miroir Cm, qui peut avantageusement être une couche d'argent.

Le parfum vient de préférence en contact direct avec la couche réfléchissante. Toutefois, dans les cas où la couche réfléchissante n'est pas compatible avec le contact du parfum, il est envisagé de recouvrir la couche réfléchissante avec une couche de sol gel venant en contact direct avec le parfum. Les sol gel sont des matières vitreuses inertes qui sont obtenues sans recourir à la fusion.

La présente invention permet ainsi de réaliser un décor réfléchissant à l'intérieur d'un réservoir de parfum destiné à contenir directement le parfum sans risque de détériorer le parfum ou de nuire à la santé de l'utilisateur.

## Revendications

1. Flacon de parfum comprenant un corps (1) et un col (2), le corps (1) définissant un réservoir de parfum (10) délimité par une surface interne (14), le corps étant réalisé en matériau sensiblement transparent, tel que du verre, la surface interne (14) étant au moins partiellement revêtue avec une couche réfléchissante (Cm) conférant un effet miroir, la couche (Cm) étant visible et réfléchissante à travers le matériau transparent constitutif du corps.

2. Flacon de parfum selon la revendication 1, dans lequel la couche (Cm) est une couche d'argenture, essentiellement constituée d'ions d'argent.

3. Flacon de parfum selon la revendication 1, dans lequel la couche (Cm) est une couche d'un métal ayant des propriétés d'oxydoréduction, tel que l'or, le cuivre, le zinc, l'argent oxydé.

4. Flacon de parfum selon la revendication 1, 2 ou 3, dans lequel la surface interne (14) est pourvue de plusieurs zones de couche (Cm) qui sont séparées par des zones nues non revêtues (Zn) au niveau desquelles le parfum est visible dans le réservoir (10).

5. Flacon de parfum selon l'une quelconque des revendications précédentes, comprenant une surface externe (15) au moins partiellement revêtue avec un vernis chargé de fines particules colorantes.

6. Flacon de parfum selon l'une quelconque des revendications précédentes, rempli avec du parfum, le parfum venant en contact direct de la couche (Cm).

7. Flacon de parfum selon l'une quelconque des revendications précédentes, dans lequel la couche réfléchissante (Cm) est recouverte d'une couche de sol gel venant en contact direct avec le parfum.

8. Procédé de décoration d'un flacon de parfum comprenant un corps (1) et un col (2), le corps (1) définissant un réservoir de parfum (10) délimité par une surface interne (14), le corps étant réalisé en matériau sensiblement transparent, tel que du verre, **caractérisé en ce que** l'on applique une couche réfléchissante (Cm) à l'intérieur du réservoir sur sa surface interne (14) conférant un effet miroir, la couche (Cm) étant visible et réfléchissante à travers le matériau transparent constitutif du corps.

9. Procédé de décoration selon la revendication 8, dans lequel la couche (Cm) est une couche d'argenture, essentiellement constituée d'ions d'argent, d'or, de cuivre, de zinc, d'argent oxydé ou tout autre élément métallique ayant des propriétés d'oxydo-réduction.

10. Procédé de décoration selon la revendication 8 ou 9, dans lequel une solution réductrice de AgN03 est appliquée sur la surface interne (14) pour former la couche (Cm).

11. Procédé de décoration selon la revendication 8, 9 ou 10, dans lequel un activateur, tel que du chlorure d'étain, et/ou un promoteur d'adhérence, tel que du chlorure de palladium, est appliqué préalablement sur la surface interne (14) avant application de la couche (Cm).

12. Procédé de décoration selon l'une quelconque des revendications 8 à 11, comprenant de soumettre le flacon avec sa couche (Cm) à une température d'environ 150°C à 190°C pendant une période d'environ 20 à 60 minutes.

13. Procédé de décoration selon l'une quelconque des revendications 8 à 12, comprenant de revêtir au moins partiellement une surface externe (15) du flacon avec un vernis chargé de fines particules colorantes.

14. Procédé de décoration selon l'une quelconque des revendications 8 à 13, dans lequel une partie de la couche (Cm) est retirée de la surface interne (14) pour former des zones nues non revêtues (Zn) au niveau desquelles le parfum est visible dans le réservoir (10).

15. Procédé de décoration selon la revendication 14, dans lequel on utilise un laser pour retirer la couche (Cm), le laser atteignant la couche (Cm) de l'extérieur du flacon à travers le matériau constitutif du corps (1), le laser étant un laser fibré de type Yag.

16. Procédé de décoration selon l'une quelconque des revendications 8 à 15, dans lequel on applique une couche de sol gel sur la couche réfléchissante (Cm).

## Patentansprüche

1. Parfümflakon, der einen Körper (1) und einen Hals (2) besitzt, wobei der Körper (1) einen Parfümbehälter (10) bildet, der von einer inneren Oberfläche (14) begrenzt ist, wobei der Körper aus einem im Wesentlichen transparenten Material, wie zum Beispiel Glas, besteht und wobei die innere Oberfläche (14) zumindest teilweise mit einer reflektierenden, einen Spiegeleffekt bewirkenden Beschichtung (Cm) versehen ist, die durch das den Körper bildende transparente Material hindurch sichtbar ist und reflektiert.

2. Parfümflakon nach Anspruch 1, bei dem die Beschichtung (Cm) von einer Versilberungsschicht gebildet ist, die im Wesentlichen aus Silberionen besteht.

3. Parfümflakon nach Anspruch 1, bei dem die Beschichtung (Cm) von einer Schicht aus einem Metall gebildet ist, das ein Oxidations-Reduktions-Potenzial besitzt, wie zum Beispiel Gold, Kupfer, Zink, Silberoxid.

4. Parfümflakon nach einem der Ansprüche 1, 2 oder 3, bei dem die innere Oberfläche (14) mit mehreren, eine Beschichtung (Cm) aufweisenden Zonen versehen ist, die durch blanke, nicht bedeckte Zonen (Zn) voneinander getrennt sind, in deren Bereich das Parfüm in dem Behälter (10) sichtbar ist.

5. Parfümflakon nach einem der vorhergehenden Ansprüche, der eine äußere Oberfläche (15) aufweist, die zumindest teilweise mit einem Lack bedeckt ist, der mit feinen Farbpartikeln beladen ist.

6. Parfümflakon nach einem der vorhergehenden Ansprüche, der mit Parfüm gefüllt ist, wobei das Parfüm mit der Beschichtung (Cm) direkt in Berührung steht.

7. Parfümflakon nach einem der vorhergehenden Ansprüche, bei dem die reflektierende Beschichtung (Cm) mit einer Sol-Gel-Schicht abgedeckt ist, die mit dem Parfüm in direkte Berührung kommt.

8. Verfahren zum Verzieren eines Parfümflakons, der einen Körper (1) und einen Hals (2) besitzt, wobei der Körper (1) einen Parfümbehälter (10) bildet, der von einer inneren Oberfläche (14) begrenzt ist, wobei der Körper aus einem im Wesentlichen transparenten Material, wie zum Beispiel Glas, besteht, **dadurch gekennzeichnet, dass** man im Inneren des Behälters auf die innere Oberfläche (14) eine reflektierende Beschichtung (Cm) aufbringt, die einen Spiegeleffekt bewirkt, wobei die Beschichtung (Cm) durch das den Körper bildende transparente Material hindurch sichtbar ist und reflektiert.

9. Verfahren zum Verzieren nach Anspruch 8, bei dem die Beschichtung (Cm) eine Versilberungsschicht ist, die im Wesentlichen aus Silberionen, Gold, Kupfer, Zink, Silberoxid oder irgend einem anderen metallischen Element besteht, das Oxidations-Reduktions-Eigenschaften besitzt.

10. Verfahren zum Verzieren nach Anspruch 8 oder 9, bei dem eine reduzierende Lösung von AgNO3 auf die innere Oberfläche (14) aufgebracht wird, um die Beschichtung (Cm) zu bilden.

11. Verfahren zum Verzieren nach Anspruch 8, 9 oder 10, bei dem ein Aktivator, wie zum Beispiel Zinnchlorid und/oder ein Haftverbesserer, wie zum Beispiel Palladiumchlorid zuvor auf die innere Oberfläche (14) aufgebracht wird, bevor das Aufbringen der Beschichtung (Cm) erfolgt.

12. Verfahren zum Verzieren nach einem der Ansprüche 8 bis 11, das den Schritt umfasst, dass der Flakon mit seiner Beschichtung (Cm) während eines Zeitraums von ungefähr 20 bis 60 Minuten einer Temperatur von ungefähr 150 °C bis 190 °C ausgesetzt wird.

13. Verfahren zum Verzieren nach einem der Ansprüche 8 bis 12, das den Schritt umfasst, eine äußere Oberfläche (15) des Flakons zumindest teilweise mit einem Lack abzudecken, der mit feinen Farbpartikeln beladen ist.

14. Verfahren zum Verzieren nach einem der Ansprüche 8 bis 13, bei dem ein Teil der Beschichtung (Cm) von der inneren Oberfläche (14) entfernt wird, um blanke, nicht abgedeckte Zonen (Zn) zu bilden, in deren Bereich das Parfüm in dem Behälter (10) sichtbar ist.

15. Verfahren zum Verzieren nach Anspruch 14, bei dem man einen Laser verwendet, um die Beschichtung (Cm) zu entfernen, wobei der Laser die Beschichtung (Cm) von der Außenseite des Flakons her durch das den Körper (1) bildende Material hindurch erreicht, wobei es sich bei dem Laser um einen Faser-Laser vom Typ Yag handelt.

16. Verfahren zum Verzieren nach einem der Ansprüche 8 bis 15, bei welchem man auf die reflektierende Beschichtung (Cm) eine Sol-Gel-Schicht aufbringt.

## Claims

1. A perfume bottle comprising a body (1) and a neck (2), the body (1) defining a perfume reservoir (10) that is defined by an inside surface (14), the body being made of material that is substantially transparent, such as glass, the inside surface (14) being coated, at least in part, with a reflective layer (Cm) that imparts a mirror effect, the layer (Cm) being visible and reflective through the transparent material that constitutes the body.

2. A perfume bottle according to claim 1, wherein the layer (Cm) is a layer of silvering, essentially constituted by silver ions.

3. A perfume bottle according to claim 1, wherein the reflective layer (Cm) is a layer of a metal having oxidation-reduction properties, such as gold, copper, zinc, oxidized silver.

4. A perfume bottle according to claim 1, 2, or 3, wherein the inside surface (14) is provided with a plurality of layer zones (Cm) that are separated by non-coated bare zones (Zn) through which the perfume is visible in the reservoir (10).

5. A perfume bottle according to any preceding claim, including an outside surface (15) that is coated, at least in part, with a varnish that is filled with fine color particles.

6. A perfume bottle according to any preceding claim, filled with perfume, the perfume coming into direct contact with the layer (Cm).

7. A perfume bottle according to any preceding claim, wherein the reflective layer (Cm) is covered with a sol-gel layer that comes into direct contact with the perfume.

8. A method of decorating a perfume bottle comprising a body (1) and a neck (2), the body (1) defining a perfume reservoir (10) that is defined by an inside surface (14), the body being made of material that is substantially transparent, such as glass, the bottle being **characterized in that** a reflective layer (Cm) is applied to the inside of the reservoir on its inside surface (14), that imparts a mirror effect, the layer (Cm) being visible and reflective through the transparent material that constitutes the body.

9. A decorating method according to claim 8, wherein the layer (Cm) is a layer of silvering, essentially constituted by ions of silver, gold, copper, zinc, oxidized silver, or any other metal element having oxidation-reduction properties.

10. A decorating method according to claim 8 or claim 9, wherein a reducing solution of AgNO₃ is applied to the inside surface (14) so as to form the layer (Cm).

11. A decorating method according to claim 8, 9, or 10, wherein an activator, such as tin chloride, and/or an adhesion promoter, such as palladium chloride, is applied to the inside surface (14) prior to applying the layer (Cm).

12. A decorating method according to any one of claims 8 to 11, including subjecting the bottle, with its layer (Cm), to a temperature lying in the range about 150°C to 190°C for a period lying in the range about 20 min to 60 min.

13. A decorating method according to any one of claims 8 to 12, including coating, at least in part, an outside surface (15) of the bottle with a varnish that is filled with fine color particles.

14. A decorating method according to any one of claims 8 to 13, wherein a fraction of the layer (Cm) is removed from the inside surface (14), so as to form non-coated bare zones (Zn) through which the perfume is visible in the reservoir (10).

15. A decorating method according to claim 14, wherein a laser is used to remove the layer (Cm), the laser reaching the layer (Cm) from the outside of the bottle through the material that constitutes the body (1), the laser being a YAG-type fiber laser.

16. A decorating method according to any one of claims 8 to 15, wherein a sol-gel layer is applied to the reflective layer (Cm).
